# EUROPEAN PATENT SPECIFICATION

(11) **EP 1 624 638 B1**
(45) Date of publication and mention of the grant of the patent: **25.10.2006**
(21) Application number: 04291996.9
(22) Date of filing: 05.08.2004
(51) Int. Cl.: H04L 29/06

(54) **Access control method and apparatus**
Verfahren und Vorrichtung zur Zugriffssteuerung
Procédé et dispositif de commande d'accès

(43) Date of publication of application: 08.02.2006
(73) Proprietor: ALCATEL, 75008 Paris (FR)
(72) Inventor: Natarajan, Sreekanth, 2018 Antwerp (BE); Pauwels, Ludwig Alice Julienne, 9120 Beveren (BE); De Cnodder, Stefaan Jozef, 2275 Lille (BE); Jonnala, Nagi Reddy, 2018 Antwerp (BE)
(74) Representative: Narmon, Gisèle Marie Thérèse

(56) References cited:
- EP-A- 0 924 900
- EP-A- 1 244 254
- WO-A-03/098899
- COLLABORATION: "IEEE standard for local and metropolitan area networks - Virtual bridged local area networks- amendment 2: VLAN classification by protocol and port" REPORT NO.: IEEE STD 802.1V-2001 INST. ELECTR. & ELECTRON. ENG., NEW YORK, NY, USA USA, 2001, XP002309666 ISBN: 0-7381-2818-X

## Description

The present invention relates to an access control unit of a data communication network comprising an access control means adapted to receive an authorization from an authentication server, whereby a particular user is authorized to access said data communication network, and thereupon to grant said particular user an access to said data communication network.

An access control unit provides a user with an access towards a data communication network, while cooperating with an authentication server to check whether the user is allowed to access the data communication network.

The authentication server usually authenticates a credential that the user provides, such as a password, a user certificate, etc, and, upon successful authentication and policy control, returns an authorization to the access control unit whereby the user is authorized to access the data communication network, and any further network, such as the Internet, a Virtual Private Network (VPN), etc.

Some examples of such an authentication server and access control unit are known from WO03098899 and EP0924900.

Examples of such an access control unit are a Digital Subscriber Line Access Multiplexer (DSLAM) providing an access towards an access network, and further towards a network service provider, such as an Internet Service Provider (ISP), or a content provider, such as a Video on Demand (VoD) provider, a Broadband Remote Access server (BRAS) providing an access towards a provider's network, an Ethernet bridge providing an access towards a Local Area Network (LAN) or a Metropolitan Area Network (MAN), etc.

Examples of such an authentication server are a RADIUS server, as defined in Request For Comment (RFC) 2865, published by the Internet Engineering Task Force (IETF), a DIAMETER server, as defined in RFC 3588, etc.

An example of such an authorization is the RADIUS access-accept message.

It is of common general knowledge that the access control unit may further comprise a frame classifier adapted to tag untagged frames entering said data communication network with identifiers of virtual networks overlaying over said data communication network.

An example of such an access control unit is known from EP1244254

Virtual networks (or virtual broadcast domains) allow for traffic segregation within a large scale network by controlling the extent to which a frame is forwarded or broadcast.

As an example, Ethernet-based networks can be partitioned into Virtual Local Area Network (VLAN), as defined in 802.1Q standard, published by the Institute of Electrical and Electronics Engineers (IEEE).

Each frame entering the data communication network shall be classified as belonging to only one VLAN by associating a VLAN IDentifier (VID) to that frame.

The access control unit may implement port-based or port-and-protocol-based VLAN classification.

In port-based VLAN classification, the VID associated with an untagged frame (a frame with no tag header, or a frame with a tag header that carries the null VID) is the Port VID (PVID) associated with the port through which the frame was received.

In port-and-protocol-based VLAN classification, the VID is determined based on the port through which the frame was received, and on the payload type the frame is carrying. The latter requires the association of multiple VIDs with a particular port (this is known as the VID set of that port), and further the association of each VID of the VID set with a particular protocol group comprising one or more protocol identifiers. If no match is found in the VID set, then the PVID applies.

The enhancement to allow for classification of incoming pockets by methods other than source port are described in "IEEE standard for local and metropolitan area networks - Virtual bridged area networks - amendment 2: VLAN classification by protocol and port", IEEE STD 802.IV-2001, IEEE, New York, USA, 2001

As an example, Internet Protocol version 6 (IPv6) traffic may be forwarded via a particular VLAN towards a device that is capable of dealing with such a traffic type. Still another example, IP datagrams encapsulated into Point-to-Point Protocol (PPP) frames may be forwarded via one VLAN towards e.g. a BRAS, while IP datagrams directly encapsulated into Ethernet frames is forwarded via another VLAN towards e.g. an IP router.

Other traffic segregation can be thought of, e.g. based upon the protocol identifiers defined in §8.9.1 of IEEE 802.1Q standard, 2003 edition.

The PVID and the VID set are usually configured by management, e.g. by means of Simple Network Management Protocol (SNMP). This configuration scheme is not suited for access control units. As a matter of fact, each and every user port is to be statically configured with the PVID and the VID set that is applicable to that user. This is all the more arduous and time-consuming as there are users. Furthermore, each port is to be configured based on some selected user information, such as to which provider the user subscribes.

It is an object of the present invention to ease configuration of the access control unit.

According to the invention, this object is achieved due to the fact that said access control means is further adapted to derive, from an additional information element encoded into said authorization, an association for said particular user between a particular payload type and a particular virtual network overlaying over said data communication network,
and in that said frame classifier is coupled to said access control means, and is further adapted to tag particular untagged frames entering said data communication network, related to said particular user and carrying said particular payload type, with a particular virtual network identifier of said particular virtual network.

An access control unit according to the invention is advantageous in that a particular VID set, and corresponding protocol identifiers, applicable to a particular user is configured dynamically and automatically based on the provider the user has logged into.

This solution is more scalable, as the frame classifier is only configured with the strict necessary set of associations, i.e. the ones related to users that are currently logged in, thereby lightening considerably the memory requirements of the access control unit, assuming the probability all the users are logged in simultaneously is very low.

This solution is even more scalable if nomadic users are allowed to log in from any location. Each and every access control unit need not be configured with each and every user's association, thereby lightening the memory requirements of the access control unit at a further extent.

An embodiment of an access control unit according to the invention is characterized in that said access control means is further adapted:
- to download, out of any particular user context, a definition of said association from said authentication server into a local repository,
- to decode a particular common reference from said information element that points, for said particular user, towards said association within said local repository.

The association, while being downloaded from the authentication server, is not associated yet to any particular user. Later on, the association will be mapped to a particular user when a pointer (or common reference) towards that association is returned by the authentication server for that particular user.

The association can be downloaded, and therefore resident in memory, before the user logs in, e.g. at system reboot time, or after, in case the association the reference points to is missing.

This embodiment is further advantageous in that the definition of an association can be modified (a particular payload type is forwarded towards another virtual network) at once, while each and every user's reference towards that association is kept unchanged.

Another embodiment of an access control unit according to the invention is characterized in that said access control means is further adapted to decode a definition of said association directly from said information element.

The present invention also relates to a method for controlling the access to a data communication network, and comprising the steps of:
- receiving an authorization from an authentication server, whereby a particular user is authorized to access said data communication network,
- thereupon, granting said particular user an access to said data communication network.

A method according to the invention further comprises the steps of:
- deriving, from an additional information element encoded into said authorization, an association for said particular user between a particular payload type and a particular virtual network overlaying over said data communication network,
- tagging particular untagged frames entering said data communication network, related to said particular user and carrying said particular payload type, with a particular virtual network identifier of said particular virtual network.

The present invention also relates to an authentication server for use in cooperation with an access control unit of a data communication network, and adapted to send an authorization to said access control unit, whereby a particular user is authorized to access said data communication network.

An authentication server according to the invention is further adapted to encode an additional information element into said authorization, whereby an association, for said particular user, between a particular payload type and a particular virtual network overlaying over said data communication network, is derived.

Embodiments of a method and of an authentication server according to the invention correspond with the embodiments of an access control unit according to the invention.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The above and other objects and features of the invention will become more apparent and the invention itself will be best understood by referring to the following description of an embodiment taken in conjunction with the accompanying drawings wherein:
- fig. 1 represents a data communication system,
- fig. 2 represents an access control unit according to the invention.

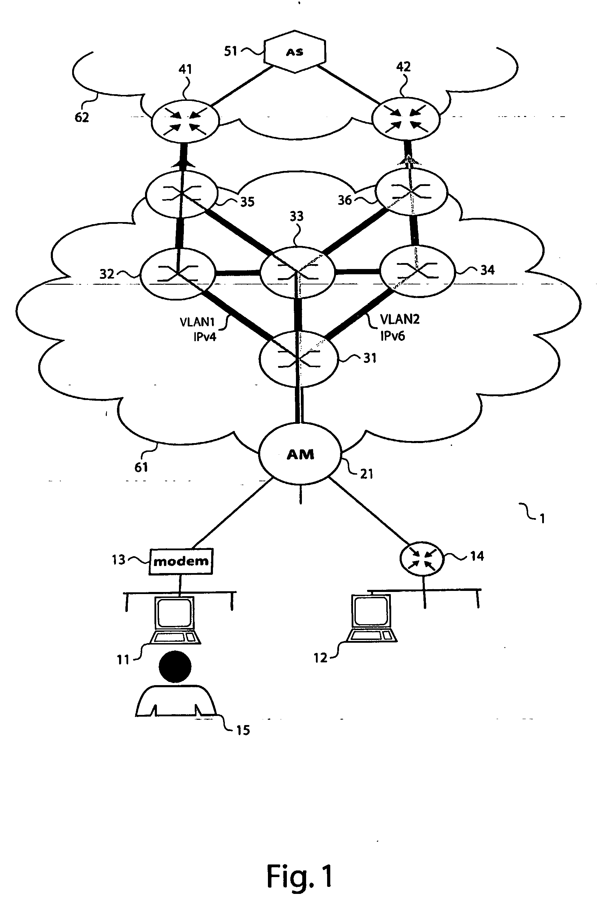

Fig. 1 represents a data communication system 1 that comprises:
- an access network 61,
- a provider's network 62,
- customer premises equipment.

In a preferred embodiment of the present invention, the data communication system 1 is Ethernet-based, and conveys IP payload. This does not preclude the use of another communication technology as known to the person skilled in the art.

The access network 61 comprises:
- an Access Multiplexer (AM) 21,
- Ethernet bridges 31 to 36.

The provider's network 62 comprises:
- edge routers 41 and 42 that interface with the access network 61,
- an Authentication Server (AS) 51.

The router 41 is capable of dealing with IPv4 traffic only, while the router 42 is capable of dealing with both IPv4 and IPv6 traffic.

The authentication server 51 is coupled to the routers 41 and 42 for communication with the access multiplexer 21.

The access network 61 is split into 2 VLANs, the topology of which is depicted in fig. 1. VLAN1 connects the access multiplexer 21 and the edge router 41 to each other through the bridges 31, 32, 33 and 35. VLAN2 connects the access multiplexer 21 and the edge router 42 to each other through the bridges 31, 33, 34 and 36.

Customer premises equipment comprise interalia:
- stations 11 and 12, such as a personal computer, a digital TV/music set, or any other terminal type,
- network equipment, such as a modem 13, a router 14, etc.

Customer premises are coupled to the access multiplexer 21, e.g. via optical fiber, copper wire, the air, etc.

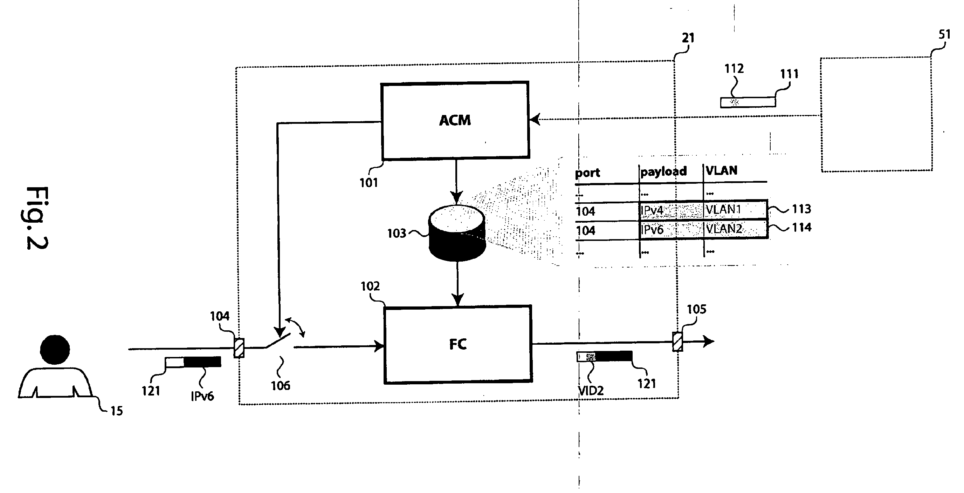

The access multiplexer 21 comprises the following functional blocks (see fig. 2):
- an Access Control Means (ACM) 101,
- a Frame Classifier (FC) 102,
- a local repository 103,
- a user port 104, which untagged frames related to a particular user are received from,
- a network port 105, which tagged frames are forwarded to.

The frame classifier 102 is coupled to the access control means 101 via the local repository 103, and is further coupled to the ports 104 and 105. The access control means 101 is coupled to the authentication server 51 via a RADIUS interface.

In a preferred embodiment of the present invention, the access control means 101 implements port-based access control. Traffic related to a particular user is identified by means of the identity of the incoming port through which it is received.

Traffic related to a particular user can also be identified by means of e.g. a source MAC address.

More specifically, the access control means 101 implements IEEE 802.1X's authenticator role. IEEE 802.1X standard defines a way of controlling, in cooperation with an authentication server, and on a per-port basis, the access to a network.

The gate 106 (see fig. 2) is initially open, i.e. traffic received through port 104 is not allowed to go further towards the network. If the authentication server 51 grants a particular user connected to that port an access towards the access network 61, the gate 106 is closed and traffic related to this user is allowed to enter the classifier 102, and further to flow through port 105 over the network 61, and further 62.

802.1X traffic is not subject to access control, and is forwarded towards the access control means 101 for further handling.

Other access control methods can be thought of, such as Point-to-Point Protocol (PPP)-based or Dynamic Host Configuration Protocol (DHCP)-based access control method, Protocol for carrying Authentication for Network Access (PANA), etc.

The frame classifier 102 implements port-and-protocol-based classification. Whenever an untagged frame enters the access multiplexer 21, the frame classifier 102 determines the identity of the incoming port through which that frame was received. Next, the frame classifier 102 determines the payload type of that frame by looking at the 'Ethertype' field in the frame header. The frame classifier 102 next retrieves the set of associations that are applicable to that port, and, among that set, the particular association that is applicable to the so-determined payload type. Finally, the frame classifier 102 identifies a particular VLAN, whereto frames with that particular payload type shall be forwarded, and thus a particular VID with which the frame shall be tagged.

An operation of the preferred embodiment follows.

A user 15 operates the station 11. The station 11 is coupled via the modem 13 to the user port 104 of the access multiplexer 21. The station 11 implements IEEE 802.1X's supplicant role. The supplicant role might as well be implemented in e.g. router 14.

The station 11 provides the access multiplexer 21 with the credential of user 15. The credential is forwarded towards the authentication server 51 for authentication purpose. If user 15 is successfully authenticated, the authentication server 51 returns an access-accept message 111 for that particular user.

The authentication server 51 further encodes VLAN/payload type associations into an existing or new field 112 of that same message.

Presently, the authentication server 51 identifies 2 VLAN/payload type associations as being applicable to user 15. A first association 113 associates IPv4 traffic to VLAN1, and a second association 114 associates IPv6 traffic to VLAN2. In this way, IPv6 traffic is forwarded where it is appropriately processed, presently towards the edge router 42.

In a preferred embodiment of the present invention, a particular VLAN/payload type association is referred to in message 111 by means of a particular common reference. The exact definition of that association, i.e. which protocol identifier(s) maps to which VID, is downloaded separately from the authentication 51.

The authentication server 51 encodes the references of the 2 afore-mentioned associations into field 112 of message 111.

The access control means 101 decodes the references of the 2 afore-mentioned associations from field 112 of message 111, next determines the identity of the port to which user 15 is coupled, and activate, in the local repository 103, these 2 associations, presently 113 and 114, for that port, presently 104.

If the definition of a particular association is missing within the local repository 103, then the access control means 101 downloads it from the authentication server 51, e.g. by means of a distinct RADIUS session.

Finally, the access control means 101 closes the gate 106, letting frames related to user 15 entering the frame classifier 102.

For example, an untagged frame 121 carrying Ipv6 payload enters the access multiplexer 21 via the port 104. The frame classifier 102 identifies within the local repository 103 the associations 113 and 114 as being applicable to port 104. More specifically, the frame classifier 102 identifies the association 114 as being applicable to port 104 and further to Ipv6 payload type. Eventually, the frame classifier 102 tags the frame 121 with VID2, the identifier of VLAN2. The frame is finally forwarded towards the port 105, and further, via VLAN2, towards the edge router 42.

In an alternative embodiment of the present invention, the definition of all the applicable associations is configured by management (from a remote or local terminal).

In an alternative embodiment of the present invention, the authentication server 51 directly encodes the set of protocol identifiers and related VIDs applicable to a particular user into the access-accept message 111.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. An access control unit (21) of a data communication network (61) comprising an access control means (101) adapted to receive an authorization (111) from an authentication server (51), whereby a particular user (15) is authorized to access said data communication network, and thereupon to grant said particular user an access (106) to said data communication network,
***characterized in that*** said access control means is further adapted to derive, from an additional information element (112) encoded into said authorization, an association (114) for said particular user between a particular payload type and a particular virtual network overlaying over said data communication network,
*and **in that*** said access control unit further comprises a frame classifier (102) coupled to said access control means (via 103), and adapted to tag particular untagged frames (121) entering said data communication network, related to said particular user and carrying said particular payload type, with a particular virtual network identifier of said particular virtual network.

2. An access control unit according to claim 1, ***characterized in that*** said access control means is further adapted:
- to download, out of any particular user context, a definition of said association from said authentication server into a local repository (103),
- to decode a particular common reference from said information element **that** points, for said particular user, towards said association within said local repository.

3. An access control unit according to claim 1, ***characterized in that*** said access control means is further adapted to decode a definition of said association directly from said information element.

4. A method for controlling the access to a data communication network (61), and comprising the steps of:
- receiving an authorization (111) from an authentication server (51), whereby a particular user (15) is authorized to access said data communication network,
- thereupon, granting said particular user an access (106) to said data communication network,
***characterized in that*** said method further comprises the steps of:
- deriving, from an additional information element (112) encoded into said authorization, an association (114) for said particular user between a particular payload type and a particular virtual network overlaying over said data communication network,
- tagging particular untagged frames (121) entering said data communication network, related to said particular user and carrying said particular payload type, with a particular virtual network identifier of said particular virtual network.

5. An authentication server (51) for use in cooperation with an access control unit (21) of a data communication network (61), and adapted to send an authorization (111) to said access control unit, whereby a particular user (15) is authorized to access said data communication network,
***characterized in that*** said authentication server is further adapted to encode an additional information element (112) into said authorization, whereby an association (114), for said particular user, between a particular payload type and a particular virtual network overlaying over said data communication network, is derived.

## Patentansprüche

1. Zugriffssteuerungseinheit (21) zu einem Datenkommunikationsnetz (61), die eine Zugriffssteuerungseinrichtung (101) umfasst, die zum Empfangen einer Autorisierung (111) von einem Authentifizierungsserver (51) angepasst wurde und durch die ein bestimmter Benutzer (15) für den Zugriff auf dieses Datenkommunikationsnetz autorisiert wird, wobei diesem Benutzer im Anschluss der Zugriff (106) auf das Datenkommunikationsnetz erteilt wird,
**dadurch gekennzeichnet, dass** die Zugriffssteuerungseinrichtung weiterhin so angepasst wird, dass sie aus einem in dieser Autorisierung codierten zusätzlichen Informationselement (112) eine Zuordnung (114) für diesen Benutzer ableitet zwischen einem bestimmten Nutzlasttyp und einem bestimmten virtuellen Netz, das dieses Datenkommunikationsnetz überlagert,
und **dadurch gekennzeichnet, dass** diese Zugriffssteuerungseinheit weiterhin einen Rahmenklassifizierer (102) umfasst, der mit dieser Zugriffssteuerungseinheit gekoppelt ist (über 103) und der so angepasst wurde, dass er bestimmte nicht **gekennzeichnet**e Rahmen (121), die in dieses Datenkommunikationsnetz gelangen und einen Bezug zu dem bestimmten Benutzer haben und den bestimmten Nutzlasttyp aufweisen, durch eine bestimmte virtuelle Netzwerkkennung dieses bestimmten virtuellen Netzwerks kennzeichnet.

2. Zugriffssteuerungseinheit gemäß Anspruch 1, **dadurch gekennzeichnet, dass** diese Zugriffssteuerungseinheit weiter angepasst wurde:
- zum Herunterladen einer Definition dieser Zuordnung aus einem bestimmten Benutzerkontext von diesem Authentifizierungsserver in ein lokales Depot (103),
- zum Decodieren einer bestimmten allgemeinen Referenz aus diesem Informationselement, die für diesen bestimmten Benutzer auf die Zuordnung innerhalb des lokalen Depots verweist.

3. Zugriffssteuerungseinheit gemäß Anspruch 1, **dadurch gekennzeichnet, dass** diese Zugriffssteuerungseinheit weiter angepasst wurde zum Decodieren einer Definition dieser Zuordnung direkt aus diesem Informationselement.

4. Verfahren zur Steuerung des Zugriffs auf ein Datenkommunikationsnetz (61), das die folgenden Schritte umfasst:
- Empfangen einer Autorisierung (111) von einem Authentifizierungsserver (51), wodurch ein bestimmter Benutzer (15) für den Zugriff auf das Datenkommunikationsnetz autorisiert wird,
- daran anschließend Erteilung des Zugriffs (106) auf das Datenkommunikationsnetz für diesen bestimmten Benutzer,
**dadurch gekennzeichnet, dass** dieses Verfahren weiterhin die folgenden Schritte umfasst:
- Ableitung einer Zuordnung (114) für diesen bestimmten Benutzer zwischen einem bestimmten Nutzlasttyp und einem bestimmten virtuellen Netz, das dieses Datenkommunikationsnetz überlagert, aus einem in dieser Autorisierung codierten zusätzlichen Informationselement (112),
- Kennzeichnung bestimmter nicht **gekennzeichnet**er Rahmen (121), die in dieses Datenkommunikationsnetz gelangen und einen Bezug zu dem bestimmten Benutzer haben und den bestimmten Nutzlasttyp aufweisen, mit einer bestimmten virtuellen Netzwerkkennung dieses bestimmten virtuellen Netzwerks.

5. Authentifizierungsserver (51) zur Verwendung in Verbindung mit einer Zugriffssteuerungseinheit (21) eines Datenkommunikationsnetzes (61) und so angepasst, dass er eine Autorisierung (111) an diese Zugriffssteuerungseinheit sendet, wodurch ein bestimmter Benutzer (15) für den Zugriff auf dieses Datenkommunikationsnetz autorisiert wird,
**dadurch gekennzeichnet, dass** der Authentifizierungsserver weiterhin so angepasst wurde, dass er ein zusätzliches Informationselement (112) in diese Autorisierung codiert, wodurch eine Zuordnung (114) für diesen bestimmten Benutzer zwischen einem bestimmten Nutzlasttyp und einem bestimmten virtuellen Netz, das dieses Datenkommunikationsnetz überlagert, abgeleitet wird.

## Revendications

1. Un dispositif de commande d'accès (21) d'un réseau de communication de données (61) comprenant des moyens de commande d'accès (101) adaptés pour recevoir une autorisation (111) d'un serveur d'authentification (51), moyennant quoi un utilisateur particulier (15) est autorisé à accéder au dit réseau de communication de données, et sur ce pour attribuer au dit utilisateur particulier un accès (106) au dit réseau de communication de données,
**caractérisé en ce que** lesdits moyens de commande d'accès sont en outre adaptés pour déduire, d'un élément d'information supplémentaire (112) codé dans ladite autorisation, une association (114) pour ledit utilisateur particulier entre un type de charge utile particulier et un réseau virtuel particulier se superposant au dit réseau de communication de données,
et **en ce que** ledit dispositif de commande d'accès comprend en outre un classificateur de trame (102) couplé aux dits moyens de commande d'accès (par le biais de 103), et adaptés pour baliser des trames particulières non balisées (121) entrant dans ledit réseau de communication de données, relatives au dit utilisateur particulier et portant ledit type de charge utile particulier, avec un identificateur de réseau virtuel particulier dudit réseau virtuel particulier.

2. Dispositif de commande d'accès selon la revendication 1, **caractérisé en ce que** lesdits moyens de commande d'accès sont en outre adaptés :
- pour télécharger, en dehors de tout contexte d'utilisateur particulier, une définition de ladite association à partir dudit serveur d'authentification dans un référentiel local (103),
- pour décoder une référence commune particulière à partir dudit élément d'information qui pointe, pour ledit utilisateur particulier, vers ladite association dans ledit référentiel local.

3. Dispositif de commande d'accès selon la revendication 1, **caractérisé en ce que** lesdits moyens de commande d'accès sont en outre adaptés pour décoder une définition de ladite association directement dudit élément d'information.

4. Procédé pour commander l'accès à un réseau de communication de données (61), et comprenant les étapes consistant à :
- recevoir une autorisation (111) d'un serveur d'authentification (51), moyennant quoi un utilisateur particulier (15) est autorisé à accéder au dit réseau de communication de données,
- sur ce, attribuer au dit utilisateur particulier un accès (106) au dit réseau de communication de données,
**caractérisé en ce que** ledit procédé comprend en outre les étapes consistant à :
- déduire, à partir d'un élément d'information supplémentaire (112) codé dans ladite autorisation, une association (114) pour ledit utilisateur particulier entre un type de charge utile particulier et un réseau virtuel particulier se superposant au dit réseau de communication de données,
- baliser des trames particulières non balisées (121) entrant dans ledit réseau de communication de données, relatives au dit utilisateur particulier et portant ledit type de charge utile particulier, avec un identificateur de réseau virtuel particulier dudit réseau virtuel particulier.

5. Serveur d'authentification (51) à utiliser en coopération avec un dispositif de commande d'accès (21) d'un réseau de communication de données (61), et adapté pour envoyer une autorisation (111) au dit dispositif de commande d'accès, moyennant quoi un utilisateur particulier (15) est autorisé à accéder au dit réseau de communication de données, **caractérisé en ce que** ledit serveur d'authentification est en outre adapté pour coder un élément d'information supplémentaire (112) dans ladite autorisation, moyennant quoi est déduite une association (114), pour ledit utilisateur particulier, entre un type de charge utile particulier et un réseau virtuel particulier se superposant au dit réseau de communication de données.
